# EUROPEAN PATENT APPLICATION

(11) **EP 4 847 563 A2**
(43) Date of publication of application: **02.12.2026**
(21) Application number: 26181800.9
(22) Date of filing: 29.05.2026
(51) Int. Cl.: C08L 77/02, C08G 69/14

(54) **THERMOPLASTIC COMPOSITIONS CONTAINING FUNCTIONALIZED ELASTOMERS**

(30) Priority: 29.05.2025 US 202563813639 P
(71) Applicant: Kraton Polymers Nederland B.V., 1322 CE Almere (NL)
(72) Inventor: BALZANO, Luigi, 1031 HL Amsterdam (NL); Dharmarajan, Narayanaswami, Houston, 77084 (US)
(74) Representative: Henkel & Partner mbB

(57) **Abstract**

A thermoplastic composition is disclosed comprising a semi-crystalline polyamide, a maleic anhydride grafted polymer, glass fibers, and optional additives. The semi-crystalline polyamide consists essentially of a homopolymer of ε-caprolactam and is free of recurring units derived from aromatic monomers. The maleic anhydride grafted polymer has a grafted maleic anhydride content of 0.2 to 5 wt.% and is prepared by grafting maleic anhydride onto a hydrogenated styrenic block copolymer, or onto a blend comprising a hydrogenated styrenic block copolymer and a polyolefin elastomer. In embodiments, the thermoplastic composition comprises a second hydrogenated styrenic block copolymer. The thermoplastic composition provides a balanced combination of tensile strength, tensile modulus, impact resistance, and melt flow and is suitable for molded articles including battery housings.

## Description

### FIELD

The disclosure relates to thermoplastic compositions containing a functionalized hydrogenated styrenic block copolymer, methods of preparation, and applications thereof.

### BACKGROUND

Thermoplastic resins such as polyamides are widely used in mechanical and electrical components due to their mechanical strength, thermal resistance, and durability. However, polyamides can have limited impact resistance, which can restrict their use in high-performance applications such as automotive and battery-related components.

Elastomeric modifiers can improve impact resistance in polyamide compositions, but achieving good compatibility and dispersion in the polyamide matrix remains challenging. In addition, improved impact resistance is often accompanied by a reduction in stiffness, tensile strength, or processability, particularly in glass-fiber-filled polyamide compositions.

Styrenic block copolymers (SBCs), including hydrogenated styrenic block copolymers (HSBCs), as well as functionalized forms thereof such as maleic anhydride grafted SBCs, are known elastomeric modifiers for thermoplastic resins including polyamides. HSBCs can toughen thermoplastics, and maleic anhydride-grafted HSBCs can improve compatibility with polar polymers such as polyamides by enhancing interfacial adhesion and rubber phase dispersion. However, achieving a balanced combination of impact resistance, tensile strength, stiffness, and melt flow in glass-fiber-filled polyamide compositions remains challenging.

There remains a need for improved thermoplastic compositions that provides a balanced combination of tensile strength, impact resistance, and melt flow while maintaining effective compatibilization between elastomeric modifiers and the polyamide matrix.

### SUMMARY

The disclosure relates to thermoplastic compositions containing a semi-crystalline polyamide, a maleic anhydride grafted polymer, glass fibers, and optional additives. The compositions provide a balanced combination of mechanical properties and processability, including tensile strength, tensile modulus, impact resistance, and melt flow.

In one aspect, the thermoplastic composition comprises 45 to 80 wt.% of a semi-crystalline polyamide consisting essentially of a homopolymer of ε-caprolactam, 1 to 15 wt.% of a maleic anhydride grafted polymer obtained by grafting maleic anhydride onto a first hydrogenated styrenic block copolymer, a second hydrogenated styrenic block copolymer, 15 to 60 wt.% of glass fibers, 0 to 10 wt.% of an impact modifier, and 0 to 10 wt.% of at least one additive. In embodiments, the second hydrogenated styrenic block copolymer comprises at least one block composed of vinyl aromatic units and at least one block composed of hydrogenated diene units. In embodiments, a weight ratio of the maleic anhydride grafted polymer to the second hydrogenated styrenic block copolymer ranges from 1:1 to 1:9.

In another aspect, the thermoplastic composition comprises 45 to 80 wt.% of a semi-crystalline polyamide consisting essentially of a homopolymer of ε-caprolactam, 1 to 15 wt.% of a maleic anhydride grafted polymer obtained by grafting maleic anhydride onto a blend comprising a first hydrogenated styrenic block copolymer and a polyolefin elastomer, 15 to 60 wt.% of glass fibers, 0 to 10 wt.% of an impact modifier, and 0 to 10 wt.% of at least one additive. In embodiments, the blend has a weight ratio of the first hydrogenated styrenic block copolymer to the polyolefin elastomer ranging from 10:1 to 1:10.

In embodiments, the maleic anhydride grafted polymer has a grafted maleic anhydride content of 0.2 to 5 wt.%.

In embodiments, the thermoplastic composition has a melt flow rate of less than 150 g/10 min at 275°C with a 5 kg load, a tensile strength of greater than 110 MPa, a notched Izod impact strength at 23°C of greater than 5 kJ/m², and a notched Izod impact strength at -40°C of greater than 4 kJ/m².

In another aspect, the disclosure relates to an article comprising the thermoplastic composition. In embodiments, the article is a battery housing.

### DESCRIPTION

The following terms will be used throughout the specification.

"Consisting essentially of" means that the claimed composition primarily contains the specified materials, with allowances for additional components that do not materially affect novel characteristics or function of the claimed invention, with the additional components, if present, in an amount of < 30%, or < 20%, or < 10%, or < 5%.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C.

A list of embodiments presented as "A, B, or C" is to be interpreted as including the embodiments, A only, B only, C only, "A or B," "A or C," "B or C," or "A, B, or C."

"Any of A, B, or C" refers to one option from A, B, or C.

"Any of A, B, and C" refers to one or more options from A, B, and C.

"Semi-crystalline polymer" refers to a polymer material that exhibits both crystalline and amorphous regions within its molecular structure. The crystalline regions are characterized by an ordered and tightly packed arrangement of polymer chains, while the amorphous regions have a disordered and loosely packed configuration. This dual-phase morphology imparts unique physical properties to semi-crystalline polymers.

"Free of recurring units derived from aromatic monomers" refers to a polyamide whose polymer backbone does not contain recurring structural units originating from aromatic monomers, such as terephthalic acid, isophthalic acid, naphthalene dicarboxylic acids, aromatic diamines, aromatic aminocarboxylic acids, or combinations thereof. The term "free of" indicates that such recurring units are not intentionally incorporated into the polyamide and, if present at all, are present only as impurities or unavoidable trace residues in an amount of less than 0.5 mol.%, less than 0.1 mol.%, or less than 0.05 mol.%, based on total moles of recurring units in the polyamide.

"Maleated hydrogenated styrenic block copolymer" or HSBC-g-MA or maleic anhydride grafted HSBC, or maleic anhydride functionalized HSBC are used interchangeably to refer to a HSBC in which at least one maleic anhydride group is grafted onto the polymer backbone or attached to a vinyl group adjacent to the polymer backbone.

"Vinyl aromatic unit content" or VAC of a block copolymer refers to the weight % of polymerized vinyl aromatic monomers, e.g., styrene, para-methylstyrene, etc., in the block copolymer, calculated by dividing the sum of molecular weight of all vinyl aromatic units by total molecular weight of the block copolymer. VAC can be determined using proton nuclear magnetic resonance spectroscopy (¹H NMR) and ¹³C NMR. VAC sometimes is used interchangeably with PSC, or polystyrene content.

"Butylene unit content" refers to the content, in weight %, of the butylene units ("B") relative to all diene based units in a given polymer (e.g., hydrogenated block copolymer). The butylene units are formed through the polymerization of 1,3-butadiene monomer via 1,2-addition, followed by hydrogenation. The 1,3-butadiene monomer can also polymerize through 1,4-addition, which, upon hydrogenation, results in ethylene units ("E"). Both butylene and ethylene units can be present in the hydrogenated block copolymer, which can also contain vinyl aromatic units and/or other units derived from conjugated diene monomers, arranged in any order. The butylene unit content can be measured by ¹H NMR and ¹³C NMR.

"HSBC" refers to a hydrogenated styrenic block copolymer derived from the polymerization of 1,3-butadiene and/or isoprene monomers with vinyl aromatic monomers. In HSBC, a substantial proportion of the double bonds originating from the 1,3-butadiene and/or isoprene units are hydrogenated, achieving a hydrogenation level exceeding 95% or even 99%. The aromatic bonds, however, are hydrogenated to a level ranging from 0% to 15%.

"Molecular weight" or Mw refers to the polystyrene equivalent molecular weight in kg/mol of a polymer block or a block copolymer. Mw can be measured with gel permeation chromatography (GPC) using polystyrene calibration standards, such as is done according to ASTM 5296. The GPC detector can be an ultraviolet or refractive index detector or a combination thereof. The chromatograph is calibrated using commercially available polystyrene molecular weight standards. Mw of polymers measured using GPC so calibrated are polystyrene equivalent molecular weights or apparent molecular weights. Mw expressed herein is measured at the peak of the GPC trace and is commonly referred to as polystyrene equivalent "peak molecular weight," designated as Mₚ.

"Hydrogenation level" refers to the level (in %) of saturation of the double bonds (e.g., olefinic, aromatic, etc.) in a block copolymer, can be measured by ¹H NMR.

"Residual unsaturation" or RU refers to the level of olefinic unsaturation, i.e., carbon-carbon double bonds of a block copolymer, expressed in milliequivalent per gram (meq/g). One equivalent here is one mole of olefinic double bonds. RU can be measured using ¹H NMR or ozonolysis titration.

"Unit" refers to the structural building block derived from one monomer following its polymerization, representing a repeating entity that forms part of the polymer or copolymer chain. Unlike a "monomer," which is the individual molecule before polymerization, a "unit" is the transformed version of the monomer after undergoing the polymerization process. A polymerized unit can be further transformed into a hydrogenated unit or a functionalized unit.

"Coupling efficiency" or CE refers to the weight of coupled polymer molecules divided by the total weight of both coupled and uncoupled polymer molecules, expressed as a percentage (%). CE can be used to determine the amount of diblock or more generally of "uncoupled arms" content in the overall block copolymer. For example, if the coupling efficiency is 80%, the polymer will contain 20 wt.% diblock or uncoupled arms and 80 wt.% triblock and multi-arm species.

"Polydispersity index" or PDI refers to a ratio of a weight average molecular weight (M_{w}) to a number average molecular weight (Mₙ), sometimes also called as molecular weight distribution. PDI is used to indicate distribution of polymer chain molecular weights in a given polymer. The PDI can be calculated over the total GPC, or a fraction of the GPC such as a peak between two extreme apparent molecular weight values.

The present disclosure relates to a thermoplastic composition comprising: (a) a polyamide, (b) a maleic anhydride grafted polymer, (c) a hydrogenated styrenic block copolymer, (d) glass fibers, (e) optionally an impact modifier, and (f) optionally one or more additives. The maleic anhydride grafted polymer is obtained by grafting maleic anhydride onto a hydrogenated styrenic block copolymer, and in some embodiments onto a blend comprising a hydrogenated styrenic block copolymer and a polyolefin elastomer. In embodiments, the maleic anhydride grafted polymer is combined with a (non-grafted) hydrogenated styrenic block copolymer, and the relative amounts of these components are selected to control the level of maleic anhydride functionality within the composition, thereby providing a desirable balance of tensile strength, impact resistance, and melt flow.

(Polyamides (PA)): The PA is a semi-crystalline, aliphatic polyamide comprising, consisting essentially of, or consisting of a homopolymer of ε-caprolactam monomers. In embodiments, the PA is free of recurring units derived from aromatic monomers.

In embodiments, the PA is formed via ring-opening polymerization of ε-caprolactam, resulting in a linear aliphatic polyamide backbone characterized by repeating -NH-(CH₂)₅-CO- units. In embodiments, the PA comprises recurring units derived from ε-caprolactam in an amount of at least 90 wt.%, at least 95 wt.%, at least 97 wt.%, at least 98 wt.%, at least 99 wt.%, or 100 wt.%, based on a total weight of recurring units in the PA.

In embodiments, the PA consists essentially of recurring units derived from ε-caprolactam. In embodiments, the PA may include end groups, residual monomers, catalysts, stabilizers, chain regulators, processing aids, impurities, or other residues that do not materially affect the semi-crystalline character, melting temperature, or mechanical performance of the PA.

In embodiments, the PA is free of recurring units derived from aromatic monomers. In embodiments, the PA is free of recurring units derived from aromatic dicarboxylic acids, aromatic diamines, aromatic aminocarboxylic acids, and combinations thereof. In embodiments, the PA is free of recurring units derived from terephthalic acid, isophthalic acid, naphthalene dicarboxylic acids, xylylenediamine, and combinations thereof.

In embodiments, the PA is an aliphatic polyamide formed by condensation of aliphatic dicarboxylic acids with aliphatic diamines, polymerization of aminocarboxylic acids, polymerization of lactams, or combinations thereof. Examples of suitable aliphatic dicarboxylic acids include adipic acid, sebacic acid, and combinations thereof. Examples of suitable aliphatic diamines include hexamethylenediamine, tetramethylenediamine, and combinations thereof. Examples of aminocarboxylic acids include ω-aminocarboxylic acids.

Examples of PA include PA6, PA66, PA610, PA11, PA12, PA46, and mixtures thereof. In embodiments, the PA is PA6.

In embodiments, the PA has a number average molecular weight (Mₙ) of 2 - 50, or 5 - 40, or 10 - 35, or 10 - 30 kg/mol.

In embodiments, the PA has a crystallinity of 15 - 60%, or 20 - 50%, or 15 - 45%, or 20 - 40%, or > 15%, or < 45%, measured by DSC.

In embodiments, the PA has a melting temperature of > 180°C, or < 300°C, or 180 - 300°C, or 200 - 280°C, or 210 - 250°C, or 190 - 230°C, measured by DSC.

In embodiments, the PA has a viscosity number of > 100, or < 250, or 100 - 250, or 110 - 200, or 120 - 180, or 100 - 160 cm³/g, measured according to ISO 307.

In embodiments, the PA has a tensile modulus of > 2800, or < 4500, or 2800 - 4500, or 3000 - 4000, or 3100 - 3500 MPa, measured according to ISO 527-1.

In embodiments, the PA has a strain at break of > 15%, or < 40%, or 15 - 40%, or 18 - 35%, or 15 - 30%, measured according to ISO 527-1.

In embodiments, the PA has a yield stress of > 70, or < 120, or 70 - 120, or 75 - 110, or 80 - 100 MPa, measured according to ISO 527-1.

In embodiments, the PA has a yield strain of > 2%, or < 15%, or 2 - 15%, or 3 - 12%, or 2 - 8%, measured according to ISO 527-1.

In embodiments, the PA has a flexural modulus of > 2600, or < 4000, or 2600 - 4000, or 2700 - 3500, or 2600 - 3200 MPa, measured according to ISO 178.

In embodiments, the PA has a flexural strength of > 100, or < 250, or 100 - 250, or 110 - 200, or 100 - 150 MPa, measured according to ISO 178.

In embodiments, the PA has a Charpy notched impact strength of > 2, or < 15, or 2 - 15, or 3 - 10, or 2 - 8 kJ/m², measured at 23°C, according to ISO 179.

In embodiments, the PA has a Charpy notched impact strength of > 1, or < 10, or 1- 10, or 1.5 - 8, or 1.5 - 5 kJ/m², measured at -30°C, according to ISO 179.

In embodiments, the PA is used in amounts of 45 - 80, or 50 - 75, or 55 - 70, or > 55, or < 75 wt.%, based on total weight of the thermoplastic composition.

(Maleic Anhydride Grafted Polymer): The maleic anhydride grafted polymer is obtained by grafting maleic anhydride onto a hydrogenated styrenic block copolymer (first-HSBC), and in some embodiments onto a blend comprising an HSBC and a polyolefin elastomer (POE).

In embodiments, the amount of maleic anhydride grafted onto the HSBC is selected to tune the balance of tensile properties, impact resistance, and melt flow, thereby providing a maleic anhydride grafted polymer having a grafted maleic anhydride content of > 0.5, or < 15, or 0.5 - 15, or 1 - 10, or 0.2 - 5, or 0.5 - 5, or 0.5 - 3 wt.%, based on total weight of the maleic anhydride grafted polymer.

In embodiments, the thermoplastic composition comprises a maleic anhydride grafted polymer in amounts of 1 - 15, or 2 - 13, or 2 - 11, or > 1, or < 15 wt.%, based on total weight of the thermoplastic composition.

(Grafting Maleic Anhydride onto HSBC): In embodiments, the maleic anhydride is grafted onto an HSBC. In embodiments, the HSBC is a linear, branched, or radial block copolymer comprising at least one block "S" composed of vinyl aromatic units and at least one rubbery block "R" (block "R") composed of hydrogenated diene units, which optionally include vinyl aromatic units. The vinyl aromatic units are derived from polymerized vinyl aromatic monomers, while the hydrogenated diene units, prior to hydrogenation, are derived from polymerized conjugated diene monomers.

In embodiments, the HSBC has a general structure selected from: S-R, (S-R)ₙX, S-R-S, S-R-S-R, R-S-R-S-R, (R-S-R)ₙX, S-R-S-R-S, (S-R-S)ₙX, and mixtures thereof; n is an integer from 2 to 30, and X is residue of a coupling agent.

In embodiments, each block "R" is a block selected from E/B, E/B/S, EP/MB, EP/MB/S, E/B/EP/MB and combinations thereof.

In embodiments, block "R" is in the form of E/B composed of ethylene ("E") units and butylene ("B") units which are hydrogenated 1,4-butadiene units and hydrogenated 1,2-butadiene units, respectively.

In embodiments, block "R" is in the form of E/B/S composed of ethylene ("E") units, butylene ("B") units, and vinyl aromatic units ("S").

In embodiments, block "R" is in the form of EP/MB composed of ethylene-propylene (EP) units and methyl-butylene (MB) units. Each EP unit is a hydrogenated 1,4-isoprene unit and each MB unit is a hydrogenated 3,4-isoprene unit and a hydrogenated 1,2-isoprene unit.

In embodiments, block "R" is in the form of EP/MB/S composed of ethylene-propylene (EP) units, methyl-butylene (MB) units, and vinyl aromatic units ("S").

In embodiments, block "R" is in the form of E/B/EP/MB composed of ethylene ("E") units, butylene ("B") units, ethylene-propylene (EP) units, and methyl-butylene (MB) units.

In embodiments, the coupling agent includes bi- or polyfunctional compounds, for example divinylbenzene, halides of aliphatic or araliphatic hydrocarbons, such as 1,2-dibromoethane, bis(chloromethyl)benzene, silicon tetrachloride, dialkyl- or diarylsilicon dichloride, alkyl- or arylsilicon trichloride, tin tetrachloride, alkylsilicon methoxides, alkyl silicon ethoxides, polyfunctional aldehydes, such as terephthalic dialdehyde, ketones, esters, anhydrides, or epoxides. In embodiments, the coupling agent is selected from methyltrimethoxysilane, methyltriethoxysilane, tetramethoxysilane, dimethyladipate, gamma-glycidoxypropyltrimethoxy silane, and mixtures thereof. In embodiments, the HSBC has a coupling efficiency (CE) of > 50%, or < 90%, or 50 - 90%, or 55 - 85%.

In embodiments, the vinyl aromatic monomer is selected from the group consisting of styrene, para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, ortho-substituted styrene, meta-substituted styrene, alpha-methylstyrene, 1,1-diphenylethylene, and mixtures thereof.

In embodiments, the conjugated diene monomer is selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, myrcene, piperylene, cyclohexadiene, and mixtures thereof.

In embodiments, each block "S" has a hydrogenation level of < 30%, or < 20%, or < 10%, or < 5%, based on total double bonds present in the block "S". In embodiments, diene units in each block "R" have a hydrogenation level of > 80%, or > 90%, or > 95%, or > 98%, or up to 100%, or 80 - 99%, or 90 - 98%.

In embodiments, the HSBC is a mixture of at least two block copolymers selected from the group consisting of diblock and species with more than 2 blocks (e.g., triblock, tetrablock, pentablock, etc.). In embodiments, the diblock constitutes from 10 - 50, or 10 - 45, or 10 - 40, or 10 - 30, or 10 - 20, or < 30, or < 50 wt.%; the species with more than 2 blocks constitute from 50 - 90, or 55 - 90, or 60 - 90, or > 65, or < 98 wt.%, based on total weight of the HSBC.

In embodiments, the HSBC has a residual unsaturation (RU) of 0 - 0.5, or 0 - 0.3, or 0 - 0.2, or 0.01 - 0.4, or 0.001 - 0.1, or up to 0.5, or < 0.4, or < 0.3, or < 0.2, or < 0.1, or > 0.001 meq/g, measured by ¹H NMR or ozonolysis.

In embodiments, the HSBC has a butylene unit ("B") content of > 30, or < 60, or 30 - 60, or 35 - 55, or 30 - 50 wt.%, based on total weight of hydrogenated diene units in the HSBC.

In embodiments, the HSBC has a vinyl aromatic unit content (VAC) of < 35, or > 5, or 5 - 35, or 5 - 32, or 5 - 30, or 10 - 32 wt.%, based on total weight of the HSBC.

In embodiments, block "S" has a Mₚ of < 20, or < 15, or < 10, or > 2, or > 3, or 2 - 20, or 3 - 20, or 4 - 15, or 3 - 12, or 3 - 10 kg/mol.

In embodiments, the HSBC has a Mₚ of > 30, or < 200, or 30 - 200, or 40 - 180, or 50 - 170, or 50 - 160, or 60 - 160, or 70 - 150 kg/mol.

In embodiments, the HSBC has a melt flow rate (MFR) of > 3, or < 40, or 3 - 40, or 4 - 35, or 5 - 30, or 3 - 30, or 3 - 25 g/10 min at 230°C with 5 kg load, measured according to ASTM D1238.

In embodiments, the HSBC has a structure selected from: (S-E/B)ₙX, S-E/B-S, and mixtures thereof; value of n and details of X are as described above.

In embodiments, the HSBC is prepared by anionic polymerization or by sequential (or successive) polymerization, at a temperature of -30 to 180°C, or 10 to 150°C, or 30 to 120°C, in an inert atmosphere, e.g., nitrogen, or under pressure of 0.5 to 65 bars, for < 12 hours, or from 5 minutes to 5 hours, depending on factors including temperature, concentration of monomers, molecular weights of each block, etc. The polymerization is carried out in the presence of a suitable amount of solvent(s), e.g., ether, benzene, toluene, xylene, ethylbenzene, cyclohexane, methylcyclohexane, etc. Obtained sequential block copolymer chains can be coupled with the coupling agent (if present). In embodiments, after the sequential polymerization, hydrogenation is performed using a suitable hydrogenation catalyst.

(Grafting Maleic Anhydride onto Polyolefin Elastomer (POE) and HSBC Blend): In embodiments, the maleic anhydride is grafted onto a blend comprising an HSBC and a POE, at a weight ratio of HSBC to POE of 10:1 to 1:10, or 10:1 to 8:1, or 9.5:1 to 8.5:1, or 8:1 to 1:8, or 7:1 to 5:1, or 5:1 to 3:1, or 5:1 to 1:5. The HSBC used in the blend may have any of the structural and compositional characteristics previously described for hydrogenated styrenic block copolymers.

POE is a copolymer of at least one C₃-C₂₀ α-olefin monomer and ethylene. The POE can be a linear or branched copolymer and can contain α-olefin units from 70 - 95, or 75 - 90 wt.%, based on total weight of the POE, with the remainder comprising ethylene units. In embodiments, the C₃-C₂₀ α-olefin monomer is linear, branched, or cyclic olefins. Examples of α-olefin monomer include propylene, isobutylene, 1-butene, 1-hexene, 1-pentene, 4-methyl-1-pentene, 1-heptene, octene, 1-nonene, 1-decene, 1-dodecene, 1-tetradecene, 1-hexadecene, 1-octadecene, 1-eicosene, and the like.

Examples of POEs include ethylene / propylene copolymers, ethylene / 1-butene copolymers, ethylene / 1-hexene copolymers, ethylene / octene copolymers, propylene / ethylene random copolymer, ethylene / α-olefin / diene modified interpolymers (e.g., ethylene / propylene / diene modified interpolymers, ethylene / propylene / octene terpolymers, etc.), propylene / ethylene / 1-butene copolymers, propylene / ethylene / ethylidene norbornene copolymers, propylene / ethylene / 1-hexene copolymers, propylene / ethylene / 1-octene copolymers, propylene / ethylene / styrene copolymers, and the like.

In embodiments, the POE is a propylene / ethylene random copolymer composed of isotactic propylene repeat units with random ethylene distribution. In embodiments, POE has an ethylene content of 5 - 30, or 10 - 25 wt.%, based on total weight of the POE.

In embodiments, the POE has a density of > 0.858, or < 0.870, or 0.858 - 0.890, or 0.860 - 0.870 g/cm³, measured according to ASTM D1505.

In embodiments, the POE has a melt flow rate (MFR) of < 30, or < 20, or > 1, or 1 - 30, or 1 - 20, or 1 - 10 g/10 min, measured at 230°C with 2.16 kg load, according to ASTM D1238.

In embodiments, the POE has a Vicat softening temperature of > 40°C, or < 55°C, or 40 - 65°C, or 45 - 60°C, or 50 - 60°C.

(Preparation of Maleic Anhydride Grafted Polymer): The grafting of maleic anhydride onto either (i) an HSBC, or (ii) a blend of an HSBC and a POE can be performed in melt, solution, or solid state, as either batch or continuous process. A free radical initiator, such as a peroxide or azo compound, can be used to promote the grafting reaction.

In melt grafting embodiments, the HSBC or the HSBC/POE blend is combined with maleic anhydride and an initiator, and the mixture is processed in a twin-screw extruder at 180 to 250°C for 5 to 60 minutes.

In solution grafting embodiments, the HSBC or the HSBC/POE blend is dissolved in a solvent (e.g., toluene, xylene, etc.) heated to 50 to 100°C and reacted with maleic anhydride and an initiator for 1 to 5 hours. The grafted polymer can then be recovered by precipitation in a non-solvent such as methanol or acetone.

In embodiments when the grafted polymer is derived from an HSBC/POE blend, the components are first melt-blended using an internal mixer or single / twin-screw extruder, after which grafting is performed under conditions similar to those described above for the HSBC alone.

(Second-HSBC): In embodiments, the thermoplastic composition further comprises a second-HSBC as a separate component (from the maleic anhydride grafted polymer) and is ungrafted. The second-HSBC is a linear or branched (multi-armed) block copolymer comprising at least one block "S" composed of vinyl aromatic units, and at least one rubbery block "R" (block "R") composed of hydrogenated diene units.

In embodiments, the second-HSBC has one or more structural or compositional characteristics as described above for the first-HSBC, including block architecture, vinyl aromatic monomer, conjugated diene monomer, block "S" composition, coupling-agent residue, residual unsaturation, hydrogenation level, etc.

In embodiments, the second-HSBC is the same as the first-HSBC.

In embodiments, the second-HSBC has a general structure selected from: S-R, (S-R)ₙX, S-R-S, S-R-S-R, R-S-R-S-R, (R-S-R)ₙX, S-R-S-R-S, (S-R-S)ₙX, and mixtures thereof; n is an integer from 2 to 30, and X is residue of a coupling agent. In embodiments, each block "R" is independently selected from E/B, EP/MB, E/B/EP/MB, and combinations thereof.

In embodiments, the second-HSBC comprises a mixture of diblock and coupled block copolymer species. In embodiments, the diblock content of the second-HSBC is 1 - 50 wt.%, or 1 - 40 wt.%, or 5 - 35 wt.%, based on the total weight of the second-HSBC. In embodiments, the second-HSBC has a coupling efficiency (CE) of > 60%, or > 70%, or < 99%, or 60 - 98%, or 65 - 98%, or 70 - 95%.

In embodiments, the second-HSBC has a residual unsaturation (RU) of 0 - 0.5, or 0 - 0.3, or 0 - 0.2, or 0.01 - 0.4, or 0.001 - 0.1, or up to 0.5, or < 0.4, or < 0.3, or < 0.2, or < 0.1, or > 0.001 meq/g, measured by ¹H NMR or ozonolysis.

In embodiments, the second-HSBC has a butylene unit ("B") content of 20-95, or 30-95, or 30-90, or 35-85, or 40-80, or > 20, or > 35, or < 85 wt.%, based on total weight of hydrogenated diene units in the HSBC.

In embodiments, the second-HSBC has a vinyl aromatic unit content (VAC) of < 35, or > 5, or 5 - 35, or 5 - 32, or 5 - 30, or 10 - 32 wt.%, based on total weight of the second-HSBC.

In embodiments, each block "S" of the second-HSBC independently has a Mp of < 20, or < 15, or < 10, or > 2, or > 3, or 2 - 20, or 3 - 20, or 4 - 15, or 3 - 12, or 3 - 10 kg/mol.

In embodiments, the second-HSBC has a Mₚ of > 30, or < 200, or 30 - 200, or 40 - 180, or 50 - 170, or 50 - 160, or 60 - 160, or 70 - 150 kg/mol.

In embodiments in which block "R" comprises or is an E/B block, the second-HSBC has a general structure selected from S-E/B-S, (S-E/B)nX, (S-E/B-S)nX, and mixtures thereof, wherein n is an integer from 2 to 30 and X is a residue of a coupling agent.

In embodiments in which block "R" comprises or is an E/B block, the E/B block of the second-HSBC independently has a Mp of 20-200, or 30-175, or 40-160 kg/mol.

In embodiments in which the maleic anhydride grafted polymer is a maleic anhydride grafted HSBC, a weight ratio of the maleic anhydride grafted polymer to the second-HSBC ranges from 1:1 to 1:9, or 1:2 to 1:8, or 1:3 to 1:7, or 1:4 to 1:7, or 1:5 to 1:7, or 1:5.5 to 1:6.5, or 1:2 to 1:6, or 1:3 to 1:5, or 1:3.5 to 1:4.5.

If present, the second-HSBC functions as a non-maleated elastomeric diluent or cutback elastomer in a thermoplastic composition to tune the balance of melt flow, tensile properties, and impact resistance. In embodiments, increasing the relative amount of the second-HSBC can increase melt flow while maintaining improved tensile strength and impact resistance.

In embodiments in which the maleic anhydride grafted polymer is obtained by grafting maleic anhydride onto a blend comprising an HSBC and a POE, the second-HSBC is optional, as the polyolefin elastomer (POE) can serve as an elastomeric diluent or modifier that partially or fully replaces the function of the second-HSBC in tuning melt flow, tensile properties, and impact resistance. The second-HSBC if present, is added in an amount of up to 15 wt.%, or 1 to 12 wt.%, or 2 to 10 wt.%, or 2 to 8 wt.%, based on the total weight of the thermoplastic composition.

(Glass Fibers): The thermoplastic composition further comprises glass fibers selected from short glass fibers (cut glass), endless glass fibers (rovings), chopped strand glass fibers of A-, E-, C-, D-, S-, and R- types, and mixtures thereof. Glass fibers can be treated with any suitable sizing agent to enhance adhesion between the fibers and the polymer resin. In embodiments, the sizing agent is an amino-silane. Examples include γ-aminopropyltriethoxysilane, γ-aminopropyltrimethoxysilane, N-(2-aminoethyl)-3-aminopropyltrimethoxysilane, N-(2-aminoethyl)-3-aminopropyltriethoxysilane, bis(trimethoxysilylpropyl)amine, and mixtures thereof.

In embodiments, the glass fibers have a round, oval, elliptical, angular, or rectangular cross-section. Glass fibers with a non-circular cross-section, i.e., with an oval, elliptical, angular, or rectangular cross-section, are also termed flat glass fibers.

In embodiments, the glass fibers have an average diameter of 5 - 40 µm, or 10 - 30 µm, or 5 - 25 µm, or 5 - 20 µm; and an average length of 0.5 - 15 mm, or 1 - 12 mm, or 1 - 8 mm, or 1.5 - 6 mm.

In embodiments, the glass fibers have an aspect ratio of 10 - 150, or 20 - 100, or 30 - 70, or 10 - 70, or 30 - 150, or >10, or < 100.

In embodiments, the glass fibers have a moisture content of < 0.5, or < 0.1, or < 0.05, or > 0.0001 wt.%, based on total weight of the glass fibers.

In embodiments, the glass fibers are added in amounts of 15 - 60, or 15 - 50, or 20 - 40, or 10 - 40, or 20 - 50, or > 10, or < 60 wt.%, based on total weight of the thermoplastic composition.

(Optional Impact Modifiers): In embodiments, the thermoplastic composition further comprises additional impact modifiers, other than the functional and non-functional HSBCs. Examples of additional impact modifiers include ethylene/1-octene copolymers, propylene/1-octene copolymers, ethylene/propylene/1-octene terpolymers, ethylene/1-butene/1-octene terpolymers, propylene/1-butene/1-octene terpolymers, ethylene/1-octene/acrylonitrile terpolymers, ethylene/1-octene/methylacrylate terpolymers, ethylene/1-octene/vinyl acetate terpolymers, ethylene/1-octene/methyl methacrylate terpolymers, propylene/1-octene/acrylonitrile terpolymers, propylene/1-octene/methylacrylate terpolymers, propylene/1-octene/vinyl acetate terpolymers, propylene/1-octene/methyl methacrylate terpolymers, ethylene/1-octene/1,4-hexadiene terpolymers, propylene/1-octene/1,4-hexadiene terpolymers, ethylene/ 1-octene/ethylidenenorbornene terpolymers, propylene/ 1-octene/ethylidenenorbonene terpolymers, ethylene-propylene copolymers, ethylene/1-butene and ethylene/1-hexene copolymers, ethylene/propylene/1-butene terpolymers, ethylene/propylene/1-hexene terpolymers, ethylene/propylene/1,4-hexadiene terpolymers, ethylene/propylene/ethylidene norbornene terpolymers (EPDM), butadiene rubbers (cis-1,4-polybutadiene), butyl rubbers (IIR, isobutylene-isoprene rubber), nitrile butadiene rubbers (NBR, copolymers of butadiene with acrylonitrile), styrene-butadiene rubbers (SBR), ethylene-acrylic cross-linked rubbers (copolymers of ethylene with methyl methacrylate), natural rubber, (cis-1,4-polyisoprene), and mixtures thereof.

In embodiments, impact modifier, if added, is in amounts of 0 - 10, or 0.05 - 10, or 0.1 - 5, or 0.5 - 5, or > 0.2, or < 5 wt.%, based on total weight of the thermoplastic composition.

(Optional Additives): In embodiments, the thermoplastic composition further comprises at least one additive selected from the group consisting of inorganic stabilizers, organic stabilizers, lubricants, colourants, marking materials, inorganic pigments, organic pigments, IR-absorbers, antistatic agents, antiblocking agents, nucleation agents, catalysts, chain controllers, defoamers, chain-lengthening additives, conductivity additives, carbon black, graphite, carbon nanotubes, mould-release agents, parting agents, optical brighteners, adhesives, metal pigments, metal flakes, metal-coated particles, particle fillers, and mixtures thereof.

In embodiments, the additive, if used, is in amounts of 0.05 - 10, or 0.1 - 10, or 0.5 - 5, or > 0.1, or < 10 wt.%, based on total weight of the thermoplastic composition.

(Thermoplastic Compositions): In embodiments, the thermoplastic composition comprises: (a) 45 to 80 wt.% of a semi-crystalline polyamide; (b) 1 to 15 wt.% of a maleic anhydride grafted polymer obtained by grafting maleic anhydride onto a first-HSBC; (c) a second-HSBC; (d) 15 to 60 wt.% of glass fibers; (e) 0 to 10 wt.% of an impact modifier; and (f) 0 to 10 wt.% of at least one additive, based on a total weight of the thermoplastic composition. In embodiments, the amounts of components (a) to (f) total 100 wt.%. In embodiments, a weight ratio of the maleic anhydride grafted polymer to the second-HSBC ranges from 1:1 to 1:9.

In other embodiments, the thermoplastic composition comprises: (a) 45 to 80 wt.% of a semi-crystalline polyamide; (b) 1 to 15 wt.% of a maleic anhydride grafted polymer obtained by grafting maleic anhydride onto a blend comprising a first-HSBC and a POE; (c) 15 to 60 wt.% of glass fibers; (d) 0 to 10 wt.% of an impact modifier; and (e) 0 to 10 wt.% of at least one additive, based on a total weight of the thermoplastic composition. In embodiments, the amounts of components (a) to (e) total 100 wt.%. In embodiments, the blend has a weight ratio of the first-HSBC to the POE ranging from 10:1 to 1:10. In embodiments, the thermoplastic composition further comprises a second-HSBC in an amount of up to 15 wt.%, based on a total weight of the thermoplastic composition, with the amounts of all components totaling 100 wt.%.

(Preparation of Thermoplastic Compositions): The thermoplastic composition can be prepared by mixing components in the molten state. In embodiments, glass fibers are metered into the melt via gravimetric metering scales or a side feeder using compounding machines, such as single- or twin-screw extruders or screw kneaders. The components can be metered individually into the feed or supplied in the form of a dry blend. The polymeric components and the reinforcing material can also be metered together into the feed.

In embodiments, the thermoplastic composition is prepared by introducing the PA, the maleic anhydride grafted polymer, optionally a second-HSBC, optionally an impact modifier, and optionally at least one additive into a main feed zone of an extruder and melt-mixing the components at an appropriate temperature. In embodiments, the glass fibers are introduced downstream of the main feed zone, for example through a side feeder, after at least partial melting or mixing of the PA and the maleic anhydride grafted polymer. In embodiments, downstream addition of the glass fibers reduces fiber breakage, improves dispersion, or promotes formation of a desired polymer/glass-fiber interface. Mixing is continued to obtain the final thermoplastic composition.

In embodiments, the compounding temperature ranges from 230 - 300°C, and the melt is discharged in strand form, cooled in water at 10 - 80°C and subsequently granulated.

(Properties of Thermoplastic Compositions): The addition of the maleic anhydride grafted polymer provides a balanced combination of processability and mechanical properties in glass-fiber-filled polyamide compositions, including controlled melt flow, tensile strength, tensile modulus, and impact resistance. In embodiments, the thermoplastic composition exhibits improved impact resistance together with maintained or increased tensile strength and/or tensile modulus, for example in comparison with a corresponding glass-fiber-filled polyamide composition without the maleic anhydride grafted polymer.

Without being bound by theory, the maleic anhydride functionality of the maleic anhydride grafted polymer interacts or reacts with the polyamide, the glass fibers, a sizing agent on the glass fibers, or combinations thereof. Such interactions can include acid-base interactions, amide-forming reactions, imide-forming reactions, hydrogen bonding, polar interactions, or combinations thereof. The extent of such interactions can be controlled by adjusting the relative amounts of the maleic anhydride grafted polymer and the second hydrogenated styrenic block copolymer. These interactions improve interfacial adhesion between the polyamide matrix and the glass fibers and contribute to improved tensile strength or tensile modulus.

In embodiments, the thermoplastic composition has a melt flow rate (MFR) of > 20, or < 150, or < 100, or 20 - 150, or 25 - 130, or 30 - 100, or 30 - 90, or 30 - 80, or 35 - 80, or 20 - 80, or 35 - 120, or 40 - 120, or 50 - 120 g/10 min at 275°C with 5 kg load, measured according to ASTM D1238.

In embodiments, the thermoplastic composition has a tensile modulus of > 4, or > 5, or > 6, or > 6.51, or < 20, or 3 - 20, or 3 - 10, or 4 - 15, or 4 - 10, or 4 - 9, or 5 - 12 GPa, measured according to ISO 527-2-1A.

In embodiments, the thermoplastic composition has a tensile strength of > 100, or > 109, or > 110, or < 200, or 100 - 200, or 109 - 190, or 109 - 150, or 110 - 180, or 110 - 160, or 120 - 180, or 125 - 170 MPa, measured according to ISO 527-2-1A.

In embodiments, the thermoplastic composition has a notched Izod impact strength of > 4.6, or < 40, or 4 - 40, or 5 - 40, or 5 - 35, or 5 - 30, or 5 - 20, or 10 - 30, kJ/m², measured at 23°C according to ISO 180.

In embodiments, the thermoplastic composition has a notched Izod impact strength of > 3.74, or > 4, or < 40, or 4 - 40, or 4 - 30, or 4 - 20, or 5 - 35, 5 - 25, or 5 - 15 kJ/m², measured at -40°C according to ISO 180.

(Applications): The thermoplastic composition can be used to produce molded articles by injection molding, extrusion, extrusion blow-molding, roto-molding, or combinations thereof.

Examples of molded articles include battery housings, housings for electrical or electronic components or devices, automotive components, structural components, keys, grips or gripping surfaces for hand tools, household equipment, sports equipment, furniture components, garden tools, curling tongs, hair dryers, hair cutting devices, shaving apparatus, depilation devices, measuring devices, infrared keys, mobile telephones, media players, laptops, notebooks, netbooks, game consoles, personal digital assistants (PDAs), smart phones, storage media, and combinations thereof.

(Analytical Methods): The components and properties of the thermoplastic composition can be evaluated using one or more analytical techniques, including spectroscopy, chromatography, thermal analysis, microscopy, elemental analysis, extraction or fractionation methods, and mechanical testing. A single analytical technique need not identify all components or properties, and multiple techniques can be used in combination to evaluate the presence, amount, composition, structure, or property of one or more components.

The semi-crystalline polyamide can be identified by FTIR, DSC, NMR, pyrolysis-GC/MS, or combinations thereof. A polyamide consisting essentially of a homopolymer of ε-caprolactam can be distinguished by characteristic amide absorptions in FTIR, a melting transition consistent with PA6 in DSC, and NMR signals corresponding to recurring -NH-(CH₂)₅-CO- units. The absence of recurring units derived from aromatic monomers can be evaluated by the absence, or substantial absence, of aromatic signals in NMR, aromatic ring absorptions in FTIR, aromatic-monomer pyrolysis products in pyrolysis-GC/MS, or combinations thereof. The amount of polyamide in the thermoplastic composition can be determined or estimated from an isolated polyamide-rich fraction, amide signals, nitrogen-containing polymer signals, calibrated spectroscopic or chromatographic data, mass balance, or combinations thereof.

Glass fibers can be detected by optical microscopy, SEM, EDX, TGA, ash content analysis, or combinations thereof. The amount of glass fibers in the thermoplastic composition can be determined by ashing or TGA, optionally followed by weighing of inorganic residue. In embodiments, the presence of inorganic elements associated with glass fibers can be evaluated by EDX, elemental analysis, or combinations thereof.

The maleic anhydride grafted polymer can be evaluated by isolating or enriching at least a portion of the elastomeric fraction from the thermoplastic composition and analyzing the isolated or enriched fraction by FTIR, NMR, titration, chromatography, derivatization methods, or combinations thereof. Maleic anhydride functionality, including grafted maleic anhydride, hydrolyzed maleic anhydride, maleic acid groups, anhydride-derived acid groups, imide groups, amide groups, ester groups, or reaction products derived from maleic anhydride functionality, can be evaluated by carbonyl absorptions in FTIR, carbonyl signals in NMR, acid number or titration methods, derivatization methods, or combinations thereof. The grafted maleic anhydride content can be determined on the isolated maleic anhydride grafted polymer or on an enriched fraction thereof.

The hydrogenated styrenic block copolymer portion of the maleic anhydride grafted polymer, the second hydrogenated styrenic block copolymer, and, when present, the POE portion can be characterized by NMR, FTIR, DSC, GPC, SEC, pyrolysis-GC/MS, solvent extraction, chromatographic fractionation, or combinations thereof. Vinyl aromatic unit content can be determined from NMR integrals, pyrolysis-GC/MS, or combinations thereof. Butylene unit content or other hydrogenated diene unit content can be determined from ¹H NMR, ¹³C NMR, or combinations thereof. Molecular weight, including peak molecular weight, can be determined by GPC or SEC using suitable calibration standards. A POE portion can be evaluated by detecting ethylene units, C₃-C₂₀ α-olefin units, or both, for example by NMR, FTIR, DSC, pyrolysis-GC/MS, density measurement, melt flow rate measurement, or combinations thereof.

When both the maleic anhydride grafted polymer and the second hydrogenated styrenic block copolymer are present, the two components can be evaluated based on differences in maleic anhydride functionality, polarity, solubility, chromatographic retention, molecular weight distribution, block composition, thermal transitions, or combinations thereof. The second hydrogenated styrenic block copolymer can be evaluated as an ungrafted or less polar hydrogenated styrenic block copolymer fraction. The presence of at least one block "S" composed of vinyl aromatic units and at least one block "R" composed of hydrogenated diene units can be evaluated by detecting aromatic signals associated with vinyl aromatic units and aliphatic signals associated with hydrogenated diene units.

The amount of the maleic anhydride grafted polymer, the second hydrogenated styrenic block copolymer, the POE, the impact modifier, the additive, or combinations thereof can be determined or estimated from separated or enriched organic fractions, calibrated chromatographic peak areas, NMR integrals, FTIR signals, pyrolysis-GC/MS response factors, elemental analysis, thermal transitions, reference materials, mass balance, or combinations thereof. A weight ratio of the maleic anhydride grafted polymer to the second hydrogenated styrenic block copolymer, or a weight ratio of the first hydrogenated styrenic block copolymer to the POE in the maleic anhydride grafted polymer, can be determined or estimated using such techniques. The amounts of the components can be normalized to the total weight of the thermoplastic composition to determine whether the components total 100 wt.%.

The melt flow rate of the thermoplastic composition can be measured at 275°C with a 5 kg load according to ASTM D1238. Tensile strength and tensile modulus can be measured according to ISO 527-2-1A. Notched Izod impact strength at 23°C and at -40°C can be measured according to ISO 180. Crystallinity and melting temperature of the polyamide can be measured by DSC. A POE portion, when present, can be evaluated by detecting propylene units, ethylene units, or both using NMR, FTIR, pyrolysis-GC/MS, DSC, or combinations thereof.

(Examples): The following examples are intended to be non-limiting.

The components used in examples include:
PA-1 is a semi-crystalline polyamide (ε-caprolactam) having melting temperature of 220°C, viscosity number of 132 cm³/g, tensile modulus of 3200 MPa, Charpy notched impact strength of 4.5 kJ/m² measured at 23°C, and crystallinity of 20 to 40%.
HSBC-g-MA-1 was prepared from a styrene-ethylene/butylene-styrene block (S-E/B-S) copolymer having an Mₚ of block copolymer of 79 kg/mol, Mₚ of block "S" of 7.3 kg/mol, VAC of 30 wt.%, a diblock content of < 1 wt.%, and butylene unit ("B") content of ~27 wt.%. The resulting maleic anhydride grafted polymer has a grafted maleic anhydride content of 1.0 to 1.8 wt.%, butylene unit ("B") content of ~27 wt.%, based on hydrogenated diene units in the maleic anhydride grafted polymer, and a vinyl aromatic unit content (VAC) of about 29-30 wt.%, based on a total weight of the maleic anhydride grafted polymer.
HSBC-g-MA-2 was prepared from a styrene-ethylene/butylene-styrene block (S-E/B-S) copolymer having an Mₚ of block copolymer of 111 kg/mol, Mₚ of block "S" of 6 kg/mol, VAC of 21 wt.%, diblock content of 15 wt.%, butylene unit ("B") content of 30-40 wt.%. The resulting maleic anhydride grafted polymer has a grafted maleic anhydride content of 0.7 to 1.7 wt.%, a butylene unit ("B") content of 30-40 wt.%, based on hydrogenated diene units in the maleic anhydride grafted polymer, and a vinyl aromatic unit content (VAC) of about 20-21 wt.%, based on a total weight of the maleic anhydride grafted polymer.
HSBC-1 is a styrene-ethylene/butylene-styrene (S-E/B-S) copolymer having Mₚ of block "S" of 5 kg/mol, VAC of 13 wt.%, Mₚ of block copolymer of 145 kg/mol, diblock content of 29 wt.%, and butylene unit ("B") content of 44 wt.%.
HSBC-2 is a styrene-ethylene/butylene-styrene (S-E/B-S) copolymer having Mₚ of block "S" of 7 kg/mol, VAC of 30 wt.%, Mₚ of block copolymer of 77 kg/mol, and butylene unit ("B") content of 38 wt.%.
POE-1 is a propylene / ethylene random copolymer composed of isotactic propylene repeat units with random ethylene distribution, having ethylene content of 16 wt.%, density of 0.862 g/cm³, melt index of 1.4 g/10 min at 190°C/2.16 kg, and Vicat softening temperature of 53.9°C.
GF-1 is glass fibers having average diameter of 13 µm, length of 4 mm, moisture content of < 0.05 wt.%, and treated with sizing agent based on amino-silane, from 3B Fibreglass.
AO-1 is antioxidant, pentaerythritol tetrakis(3-(3,5-di-tert-butyl-4-hydroxyphenyl)propionate).
AO-2 is antioxidant, tris(2,4-di-tert-butylphenyl) phosphite.

(Example 1): Preparation of a maleated blend. HSBC-2 and POE-1 were blended in a weight ratio of 9:1 using a twin-screw extruder at a temperature between 210 and 220°C. Maleic anhydride (1.23 parts) and peroxide (2,5-dimethyl-2,5-di(tert-butylperoxy)hexane, 0.44 parts) were added per 100 parts of HSBC-2. The resulting maleated blend ("Ex. 1") had a MFR of 21 dg/min at 210°C/2.16 kg, grafted maleic anhydride content of 1.26 wt.%, and a yellowness index of 2.7, measured according to ASTM E313.

(Example 2): Thermoplastic compositions were prepared by mixing the components and compounding them in a twin-screw extruder at 240 to 260°C. Test specimens were subsequently molded from these compositions at 260°C for various test measurements. Table 1 lists the components and corresponding test results for a comparative example, reference examples, and examples according to embodiments of the disclosure. CEx-1 is a comparative example without a maleic anhydride grafted polymer. Ex-2a and Ex-2b are comparative examples containing a maleic anhydride grafted HSBC without a second-HSBC and without a POE. Ex-2c and Ex-2f include a maleic anhydride grafted polymer and a second-HSBC. Ex-2d includes the maleated blend of Example 1. The results demonstrate a balanced combination of properties, including improved impact strength and tensile strength, together with reduced melt flow rate for improved processability.

**Table 1**

| Components in wt.% | Comp. CEx-1 | Comp. Ex-2a | Comp. Ex-2b | Ex-2c | Ex-2d | Ex-2f |
|---|---|---|---|---|---|---|
| PA-1 | 69.9 | 59.9 | 59.9 | 59.9 | 59.9 | 59.9 |
| HSBC-g-MA-1 | - | 10 | - | 5 | - | 2 |
| HSBC-g-MA-2 | - | - | 10 | - | - | - |
| HSBC-1 | - | - | - | 5 | - | 8 |
| Ex.1 | - | - | - | - | 10 | - |
| GF-1 | 30 | 30 | 30 | 30 | 30 | 30 |
| AO-1 | 0.05 | 0.05 | 0.05 | 0.05 | 0.05 | 0.05 |
| AO-2 | 0.05 | 0.05 | 0.05 | 0.05 | 0.05 | 0.05 |
| MFR at 275°C/5 kg (g/10 min) | 150 | 43 | 40 | 58 | 46 | 70 |
| Tensile modulus (GPa) | 6.51 | 7.55 | 7.61 | 7.54 | 7.39 | 7.94 |
| Tensile strength (MPa) | 109 | 123.3 | 123 | 124 | 120.3 | 133.2 |
| Notched Izod impact strength (23°C) kJ/m² | 4.6 | 15.89 | 16.83 | 16.05 | 16.39 | 13.41 |
| Notched Izod impact strength (-40°C) kJ/m² | 3.74 | 9.26 | 10.66 | 10.1 | 10.61 | 9.09 |

## Claims

1. A thermoplastic composition comprising:
(a) 45 to 80 wt.% of a semi-crystalline polyamide consisting essentially of a homopolymer of ε-caprolactam, wherein the semi-crystalline polyamide is free of recurring units derived from aromatic monomers;
(b) 1 to 15 wt.% of a maleic anhydride grafted polymer having a grafted maleic anhydride content of 0.2 to 5 wt.%, wherein the maleic anhydride grafted polymer is obtained by grafting maleic anhydride onto a first hydrogenated styrenic block copolymer;
(c) a second hydrogenated styrenic block copolymer comprising at least one block "S" composed of vinyl aromatic units and at least one block "R" composed of hydrogenated diene units, the second hydrogenated styrenic block copolymer having a peak molecular weight (Mp) of 30 to 200 kg/mol;
(d) 15 to 60 wt.% of glass fibers;
(e) 0 to 10 wt.% of an impact modifier; and
(f) 0 to 10 wt.% of at least one additive;
wherein the amounts of components (a) to (f) total 100 wt.%;
wherein a weight ratio of the maleic anhydride grafted polymer of component (b) to the second hydrogenated styrenic block copolymer of component (c) ranges from 1:1 to 1:9;
wherein the maleic anhydride grafted polymer has:
a butylene ("B") unit content of < 60 wt.%, based on hydrogenated diene units in the maleic anhydride grafted polymer, and
a vinyl aromatic unit content (VAC) of < 35 wt.%, based on total weight of the maleic anhydride grafted polymer;
wherein the thermoplastic composition has:
a melt flow rate of <150 g/10 min at 275°C with 5 kg load, measured according to ASTM D1238;
a tensile strength of > 110 MPa, measured according to ISO 527-2-1A;
a notched Izod impact strength at 23°C of > 5 kJ/m², measured according to ISO 180; and
a notched Izod impact strength at -40°C of > 4 kJ/m², measured according to ISO 180.

2. A thermoplastic composition comprising:
(a) 45 to 80 wt.% of a semi-crystalline polyamide consisting essentially of a homopolymer of ε-caprolactam, wherein the semi-crystalline polyamide is free of recurring units derived from aromatic monomers;
(b) 1 to 15 wt.% of a maleic anhydride grafted polymer having a grafted maleic anhydride content of 0.2 to 5 wt.%, wherein the maleic anhydride grafted polymer is obtained by grafting maleic anhydride onto a blend comprising a first hydrogenated styrenic block copolymer and a polyolefin elastomer, the blend having a weight ratio of the first hydrogenated styrenic block copolymer to the polyolefin elastomer ranging from 10:1 to 1:10;
(c) 15 to 60 wt.% of glass fibers;
(d) 0 to 10 wt.% of an impact modifier; and
(e) 0 to 10 wt.% of at least one additive;
wherein the amounts of components (a) to (e) total 100 wt.%;
wherein the hydrogenated styrenic block copolymer portion of the maleic anhydride grafted polymer has:
a butylene ("B") unit content of < 60 wt.%, based on hydrogenated diene units in the hydrogenated styrenic block copolymer portion; and
a vinyl aromatic unit content (VAC) of < 35 wt.%, based on a total weight of the hydrogenated styrenic block copolymer portion; and
wherein the thermoplastic composition has:
a melt flow rate of <150 g/10 min at 275°C with 5 kg load, measured according to ASTM D1238;
a tensile strength of > 110 MPa, measured according to ISO 527-2-1A;
a notched Izod impact strength at 23°C of > 5 kJ/m², measured according to ISO 180; and
a notched Izod impact strength at -40°C of > 4 kJ/m², measured according to ISO 180.

3. The thermoplastic composition of claim 2, further comprising 1 to 15 wt.% of a second hydrogenated styrenic block copolymer comprising at least one block "S" composed of vinyl aromatic units and at least one block "R" composed of hydrogenated diene units, based on a total weight of the thermoplastic composition, wherein the amounts of the components of the thermoplastic composition including the second hydrogenated styrenic block copolymer total 100 wt.%, and wherein the second hydrogenated styrenic block copolymer is the same or different from the first hydrogenated styrenic block copolymer, and has a peak molecular weight (Mp) of 30 to 200 kg/mol.

4. The thermoplastic composition of any of claims 2-3, wherein the polyolefin elastomer comprises propylene units and ethylene units.

5. The thermoplastic composition of any of claims 2-4, wherein the polyolefin elastomer is a propylene/ethylene random copolymer.

6. The thermoplastic composition of any of the preceding claims, wherein the first hydrogenated styrenic block copolymer has a general structure selected from: S-R, (S-R)ₙX, S-R-S, S-R-S-R, R-S-R-S-R, (R-S-R)ₙX, S-R-S-R-S, (S-R-S)ₙX, and mixtures thereof,
wherein
each block "S" is composed of vinyl aromatic units,
each block "R" is independently selected from E/B, E/B/S, EP/MB, EP/MB/S, E/B/EP/MB and combinations thereof,
n is an integer from 2 to 30, and
X is residue of a coupling agent.

7. The thermoplastic composition of claim 6, wherein each block "S" has a molecular weight (Mₚ) of 3 to 20 kg/mol.

8. The thermoplastic composition of any of the preceding claims, wherein the first hydrogenated styrenic block copolymer has:
a butylene unit ("B") content of 30 to 60 wt.%, based on hydrogenated diene units in the first hydrogenated styrenic block copolymer; and
a vinyl aromatic unit content (VAC) of 5 to 35 wt.%, based on a total weight of the first hydrogenated styrenic block copolymer.

9. The thermoplastic composition of any of the preceding claims, wherein the first hydrogenated styrenic block copolymer has a molecular weight (Mp) of 40 to 180 kg/mol.

10. The thermoplastic composition of any of the preceding claims, wherein the maleic anhydride grafted polymer has a grafted maleic anhydride content of 0.5 to 3 wt.%.

11. The thermoplastic composition of any of claims 1 and 3-10, wherein the second hydrogenated styrenic block copolymer has a general structure selected from: S-R, (S-R)ₙX, S-R-S, S-R-S-R, R-S-R-S-R, (R-S-R)ₙX, S-R-S-R-S, (S-R-S)ₙX, and mixtures thereof;
wherein
each block "S" is composed of vinyl aromatic units,
each block "R" is independently selected from E/B, EP/MB, E/B/EP/MB and combinations thereof,
n is an integer from 2 to 30, and
X is residue of a coupling agent.

12. The thermoplastic composition of any of the preceding claims, wherein the polyamide has at least one of:
a crystallinity of 15 to 60%; and
a melting temperature of > 180°C;
each measured by differential scanning calorimetry (DSC).

13. The thermoplastic composition of any of the preceding claims, wherein the thermoplastic composition has:
a melt flow rate of 30 - 80 g/10 min at 275°C with 5 kg load, measured according to ASTM D1238;
a tensile strength of 110 - 180 MPa, measured according to ISO 527-2-1A;
a notched Izod impact strength at 23°C of 5 - 40 kJ/m², measured according to ISO 180; and
a notched Izod impact strength at -40°C of 4 - 40 kJ/m², measured according to ISO 180.

14. The thermoplastic composition of any of the preceding claims, wherein the glass fibers are treated with a sizing agent comprising an amino-silane.

15. A battery housing comprising the thermoplastic composition of any of the preceding claims.
